# EUROPÄISCHE PATENTANMELDUNG

(11) **EP 4 009 501 A1**
(43) Veröffentlichungstag der Anmeldung: **08.06.2022**
(21) Anmeldenummer: 20211197.7
(22) Anmeldetag: 02.12.2020
(51) Int. Cl.: H02K 11/25, H02K 21/00, G01K 11/26

(54) **ZUSTANDSÜBERWACHUNG FÜR EIN ROTIERENDES ELEMENT, INSBESONDERE FÜR DEN ROTOR EINES ELEKTROMOTORS**

(71) Anmelder: pro-micron GmbH, 87600 Kaufbeuren (DE)
(72) Erfinder: WUNDERLICH, Rainer, 87600 Kaufbeuren (DE)
(74) Vertreter: Raffay & Fleck

(57) **Zusammenfassung**

Ein Elektromotor (1) mit einem Motorgehäuse (2, 3), mit in dem Motorgehäuse (2, 3) angeordnet je einem Stator und einem Rotor (4) weist eine Überwachungseinrichtung zum Überwachen eines Zustandsparameters, wie insbesondere einer Temperatur, des Rotors (4) auf. Die Überwachungseinrichtung umfasst eine Sensoreinheit (8) und eine Abfrageeinheit. Die Sensoreinheit (8) ist an dem Rotor (4) angeordnet. Sie umfasst ein auf dem Prinzip der Oberflächenwellen basierendes SAW-Sensorelement zum Erfassen eines Zustandswerts des Zustandsparameters, ein Kopplerelement und eine das SAW-Sensorelement und das Kopplerelement zum Übertragen von analogen elektromagnetischen Signalen verbindende Leiterstruktur. Die Abfrageeinheit weist einen Signalgenerator zum Erzeugen von Abfragesignalen, eine mit dem Signalgenerator verbundene, an dem Stator oder an einem Abschnitt des Motorgehäuses (2, 3) in einem Bereich, der entlang eines zwischen dem Rotor (4) und dem Stator oder dem Abschnitt des Motorgehäuses (2, 3) ausgebildeten Luftspaltes einem von dem Kopplerelement bei rotierendem Rotor (4) überstrichenen Bereich gegenüberliegt, und dem Rotor (4) zugewandt angeordnete Kopplerstruktur (9) auf. Die Abfrageeinheit weist zudem einen Auswerteschaltkreis zum Auswerten von von der Sensoreinheit (8) empfangenen Antwortsignalen auf. Mit diesem Aufbau ist es möglich, bei einem Elektromotor Zustandswerte von Zustandsparametern, wie insbesondere die Rotortemperatur, über eine direkte Messung zu bestimmen.

## Beschreibung

Die Erfindung betrifft eine Temperaturüberwachungseinrichtung zum Überwachen eines Zustandsparameters wie der Temperatur eines rotierenden Elements, insbesondere des Rotors eines Elektromotors, insbesondere eines Synchronmotors. Sie betrifft zudem einen Elektromotor mit einem Motorgehäuse, mit in dem Motorgehäuse angeordnet je einem Stator und einem Rotor sowie mit einer Überwachungseinrichtung zum Überwachen eines Zustandsparameters, wie einer Temperatur, des Rotors.

In diversen Anwendungen sind rotierende Elemente innerhalb von statischen Elementen angeordnet, insbesondere im Bereich von Arbeitsmaschinen wie Motoren oder Turbinen. Einen besonderen Platz nehmen hierbei Elektromotoren ein, in denen Rotoren innerhalb von Statoren angeordnet sind und durch entsprechend geregelten Stromfluss durch in Wicklungen gelegte elektrische Leiter erzeugte magnetische Wechselfelder zur Rotation um eine Drehachse angetrieben werden. Eine besondere Bauform derartiger Elektromotoren sind Synchronmotoren, bei denen die Rotoren mit Permanentmagneten bestückt sind. Derartige Synchronmotoren finden insbesondere im Bereich von Elektrofahrzeugen, so insbesondere den Elektroautomobilen, Anwendung. Insbesondere in dieser Anwendung werden die Synchronmotoren mit hoher Leistung betrieben, um so starke Drehmomente zu erzeugen und hohe Beschleunigungen und Fahrgeschwindigkeiten der Elektroautomobile zu erreichen. Problematisch ist hierbei bekanntermaßen eine bei hoher Leistungsaufnahme des Synchronmotors auftretende Erwärmung von dessen Bauteilen, hierbei insbesondere des Rotors mit den darin angeordneten Permanentmagneten. Hier gilt es, ein Überschreiten einer kritischen Temperatur des Rotors zu verhindern, da ansonsten die Gefahr besteht, dass die Permanentmagnete ihre Magnetisierung verlieren oder sogar vollständig entmagnetisiert werden und damit der Synchronmotor einen irreparablen Schaden nimmt.

Aber auch bei Asynchronmotoren ist eine Überwachung der Temperatur des Rotors von Bedeutung. Insbesondere ist dort wünschenswert, die Temperatur der Kurzschlusswicklungen im Rotor zu kennen und überwachen zu können.

Allgemein ist die Kenntnis der Temperatur des Rotors einer Arbeitsmaschine aber auch aus anderen Gründen von Wichtigkeit, ist es wünschenswert diese Temperatur möglichst genau zu kennen und überwachen zu können: So können zu hohe Temperaturen die auf der Achse des Rotors nachfolgenden Elemente schädigen, so insbesondere die Lager. Z.B. kann sich Fett in einem Lager ab bspw. etwa 150°C zersetzen, was zu einem Verlust der Lagerschmierung führt und damit zu der Gefahr eines Schadens am Lager. Weiterhin kann es, wenn der Rotor heiß, der Stator indes noch deutlich kälter ist, im Lager zu einer zu hohen Pressung der Kugeln kommen, was zu einem sehr hohen Verschleiß führt.

Allgemein führt eine Temperaturerhöhung zu einer Längenausdehnung, was auch andere Komponenten in ihrer Funktion beeinträchtigen kann und z.B. bei Spindel-Motoren in Zerspanungsmaschinen dazu führt, dass die Genauigkeit der Bearbeitung beeinträchtigt wird. Eine Temperaturänderung um 10K führt bei einer Längenausdehnung von 10 ppm/K und einer angenommenen Achsenlänge von 100 mm zu einer Längenveränderung von 10*µ*m. Diese Längenveränderung durch eine genaue Kenntnis der Temperatur zu kennen und vorauszusagen, ist in diversen Anwendungen von großem Vorteil, wenn nicht gar erforderlich.

Der Problematik der Überwachung der Temperatur von Rotoren bei Synchronmotoren widmet sich auch bereits der Stand der Technik. Dabei wird die Rotortemperatur allerdings nicht direkt gemessen, sondern typischerweise mittelbar in einer auf Simulation bzw. Hochrechnung beruhenden Annäherung abgeschätzt. Beispiele für derartige Verfahren und Vorgehensweisen sind beschrieben in der EP 3 190 697 A1 und auch in der DE 10 2017 207 401 A1. auch wenn diese Methodik bereits eine verwertbare Bestimmung der Rotortemperaturen ermöglicht, kann damit die tatsächliche, am Rotor anliegende Temperatur jedoch nicht exakt bestimmt werden. Entsprechend ist bei mit dieser Methodik arbeitenden Leistungssteuerungen für Synchronmotoren stets ein gewisser Sicherheitspuffer für die Temperatur eingerechnet und wird so der Synchronmotor typischerweise mit einer unterhalb einer theoretisch erreichbaren Höchstleistung eingestellten Maximalleistung betrieben, um einen für das mittelbare Bestimmungsverfahren der Rotortemperatur gegebenen Fehler zu berücksichtigen und dabei sicherzustellen, dass eine kritische Rotortemperatur, bei der die vorstehend beschriebenen Entmagnetisierungsvorgänge auftreten können, auf keinen Fall erreicht oder gar überschritten wird.

Eine direkte Bestimmung der Rotortemperatur mit einer Messsensorik wurde bisher hier nicht in Betracht gezogen, da diese insbesondere wegen der räumlich beengten Verhältnisse und auch wegen der Problematik der Signalübertragung von der drehenden (Rotor) auf die stehende (Stator) Maschinenkomponente für nicht praktikabel angesehen wurde.

Neben der Temperatur des Rotors einer Rotationsmaschine, wie eines Elektromotors, ist es vielfach auch von Interesse oder sogar wesentlich, die Zustandswerte anderer Zustandsparameter, wie z.B. den Wert eines anliegenden Drehmoments, zu kennen und auch diese Zustandsparameter in situ überwachen und deren Zustandswert unmittelbar am Rotor messen zu können.

Ausgehend von diesem bekannten Stand der Technik und vor dem Hintergrund des geschilderten Problems ist es Aufgabe der Erfindung, eine Möglichkeit anzugeben, den Zustandswert eines Zustandsparameter, wie insbesondere die Temperatur, von rotierenden Elementen durch direkte Messung zu bestimmen und eine dies ermöglichende Sensorik auch in einem Elektromotor zu Bestimmung des Zustandswerts des Zustandsparameter, wie z.B. der Temperatur, des Rotors vorzusehen.

Diesem Problem und dieser Aufgabe widmet sich die vorliegende Erfindung, mit der eine Lösung angegeben wird, die eine Überwachung eines Zustandsparameters, wie insbesondere der Temperatur, eines rotierenden Bauteils allgemein, insbesondere die Überwachung der Temperatur des Rotors eines Elektromotors in Form einer tatsächlichen Bestimmung des Temperaturwertes durch Messung erlaubt.

Hierzu wird mit einem ersten Aspekt der Erfindung ein Elektromotor mit einem Motorgehäuse, mit in dem Motorgehäuse angeordnet je einem Stator und einem Rotor sowie mit einer Überwachungseinrichtung zum Überwachen eines Zustandsparameters, insbesondere einer Temperatur, des Rotors angegeben, wie er in Anspruch 1 bestimmt ist. Vorteilhafte Weiterbildungen eines so ausgestalteten Elektromotors sind in den abhängigen Ansprüchen 2 bis 10 angegeben. In einem weiteren Aspekt wird mit der Erfindung auch eine Überwachungseinrichtung zum Überwachen eines Zustandsparameters, insbesondere einer Temperatur, eines rotierenden Elements, insbesondere des Rotors eines Elektromotors angegeben, wie es in Anspruch 12 bestimmt ist. Weiterbildungen einer solchen Überwachungseinrichtung sind in den abhängigen Ansprüchen 13 bis 15 bestimmt.

Erfindungsgemäß weist ein Elektromotor mit einem Motorgehäuse und mit in dem Motorgehäuse angeordnet je einem Stator und einem Rotor eine Überwachungseinrichtung zum Überwachen eines Zustandsparameters, wie einer Temperatur oder auch ein anliegendes Drehmoment, des Rotors auf. Diese Überwachungseinrichtung umfasst eine Sensoreinheit und eine Abfrageeinheit. Die Sensoreinheit ist an dem Rotor angeordnet. Sie enthält ein auf dem Prinzip der Oberflächenwellen basierendes SAW-Sensorelement zum Erfassen eines Zustandswertes des Zustandsparameters, ein Kopplerelement und eine das SAW-Sensorelement und das Kopplerelement zum Übertragen von analogen elektromagnetischen Signalen verbindende Leiterstruktur. Die Abfrageeinheit enthält einen Signalgenerator zum Erzeugen von Abfragesignalen. Mit diesem Signalgenerator ist ein Kopplerelement signaltechnisch verbunden, wobei dieses Kopplerelement an dem Stator oder an einem Abschnitt des Motorgehäuses dem Rotor zugewandt angeordnet ist und zwar in einem Bereich, der entlang eines zwischen dem Rotor und dem Stator oder dem Abschnitt des Motorgehäuses ausgebildeten Luftspaltes einem von dem Kopplerelement bei rotierendem Rotor überstrichenen Bereich gegenüberliegt. Die Abfrageeinheit weist schließlich einen Auswerteschaltkreis zum Auswerten von von der Sensoreinheit empfangenen Antwortsignalen auf.

Wesentliche Aspekte dieser erfindungsgemäßen Lösung besteht nun darin, dass für eine unmittelbare Messung eines Zustandswertes eines Zustandsparameters, wie z.B. der Temperatur, des Rotors ein SAW-Sensorelement zum Einsatz kommt. Diese Art von Sensoren ist einerseits robust und kann auch unter schwierigeren Bedingungen eingesetzt werden, wie zum Beispiel bei hohen Drehzahlen, wie sie bei Elektromotoren erreicht werden (Drehzahlen von bis zu 20.000 Umdrehungen/min). Weiterhin herrschen im Inneren von Elektromotoren extrem hohe Magnetfelder, Magnetfeldgradienten sowie extrem schnelle zeitliche Änderungen des Magnetfelds vor. Während für solche elektronischen Schaltungen, wie sie sonst typischerweise in Sensoren verwendet werden, diese Randbedingungen jedenfalls extrem herausfordernd sind, deren Verwendung häufig gar gänzlich ausschließen, können SAW-Sensorelement auch unter diesen Extrembedingungen eingesetzt werden und können die Zustandswerte von zu überwachenden Zustandsparametern zuverlässig messen.

Das SAW-Sensorelement kann, wie bereits erwähnt, grundsätzlich für die Messung eines Zustandswertes eines beliebigen, mit einem solchen Sensorelement zu messenden Zustandsparameter eingerichtet sein, z.B. zur Messung einer Kraft, eines Drehmoments oder eben auch zur Messung einer Temperatur. Für die Messung einer Temperatur kann das SAW-Sensorelement dann auch als SAW-Temperatursensorelement bezeichnet werden. Analoge Bezeichnungen lassen sich für SAW-Sensorelement zur Überwachung andere Zustandsparameter wählen.

Die Leiterstruktur, die das Kopplerelement mit dem SAW-Sensorelement verbindet, kann in einem einfachsten Fall, eine direkte elektrische Verbindung zwischen dem Kopplerelement und dem SAW-Sensorelement sein, z.B. eine Lötstelle, an der elektrische Anschlüsse des Kopplerelements mit elektrischen Kontakten des SAW-Sensorelements verlötet sind. Die Leiterstruktur kann aber auch ein räumlich erstrecktes Element sein, das zwischen dem Kopplerelement und dem SAW-Sensorelement angeordnet ist. Dann muss diese Leiterstruktur in ihren Hochfrequenzeigenschaften auf das Kopplerelement angepasst sein, um Hochfrequenzsignale, bspw. bei einer Frequenz von 2,4 GHz, wie sie typischerweise verwendet werden kann, um das SAW-Sensorelement abzufragen und dort Oberflächenwellen anzuregen bzw. einzukoppeln, von dem Kopplerelement and das SAW-Sensorelement und auch von dort zurück zum Kopplerelement übertagen zu können. Weiterhin muss die Leiterstruktur auch auf das SAW-Sensorelement abgestimmt sein, damit dort das über die Leiterstruktur transportierte elektromagnetische Signal in eine Oberflächenwelle gewandelt werden kann und damit die zurücklaufende Oberflächenwelle dort wieder zur Einspeisung eines hochfrequenten elektromagnetischen Signals in die Leiterstruktur führen kann. Bei einer geschickten Wahl und Auslegung der Leiterstruktur kann hier ggf. sogar eine Verbesserung der Hochfrequenzeigenschaften der gesamten Sensoreinheit, also des verbundenen Systems aus Kopplerelement, Leiterstruktur und SAW-Sensorelement, erhalten werden.

SAW-Sensorelemente lassen sich auch in einer weitgehenden Weise miniaturisiert herstellen, sodass diese an einem Rotor eines Elektromotors vergleichsweise problemlos angeordnet werden können. Insbesondere ist es dabei auch möglich, das SAW-Sensorelement versenkt in dem Vollmaterial des Rotors anzuordnen, zum Beispiel in einer ausgehend von einer Rotoroberfläche in den Rotorkörper hineingetriebenen Bohrung. Hierfür können zum Beispiel auch produktionsseitig ohnedies bereits vorhandene Bohrungen oder andere Öffnungen in einem solchen Rotor verwendet werden als Aufnahme für das SAW-Sensorelement. Durch eine solche versenkte Aufnahme kann zum einen eine Messung eines Zustandswertes, wie z.B. einer Temperatur, noch gezielter in einem sensiblen Bereich vorgenommen werden, zum anderen ist das SAW-Sensorelement in einer solchen Bohrung geschützt angeordnet und muss nicht etwa z.B. gegen mögliche auftretende Zentrifugalkräfte beim Rotieren des Rotors besonders gesichert werden. Da der Rotor eines Elektromotors typischerweise aus einem metallischen Material besteht, welches elektromagnetische Strahlung abschirmt, ist das Kopplerelement im Bereich der Oberfläche des Rotors anzuordnen. Bei einer bevorzugt versenkten Anordnung des SAW-Sensorelements in einer Bohrung wird dabei die in die Bohrung hineinreichende Strecke zwischen dem Kopplerelement und dem SAW-Sensorelement durch die dann eben als eigenständiges Bauteil geformte und nicht nur durch eine einfache elektrische Verbindung geschaffene Leiterstruktur überbrückt, gegebenenfalls gestützt durch einen Träger, auf den die Komponenten der Sensoreinheit angeordnet sind. Die Leiterstruktur ist dabei, wie vorstehend bereits erwähnt, eingerichtet und abgestimmt, von dem Kopplerelement empfangene elektromagnetische Signale der Abfragefrequenz, die zum Beispiel im Bereich des Frequenzbandes von 2,4 GHz liegen kann, von dem Kopplerelement zu dem SAW-Sensorelement zu leiten und ebenso die Signalantwort des SAW-Sensorelements zurück zu übermitteln an das Kopplerelement für ein drahtloses Übertragen dieser Antwort an die Kopplerstruktur.

Wenn die Sensoreinheit in einer Bohrung festgelegt wird, so kann sie, wenn sie zu einer Überwachung einer Temperatur des Rotors eingesetzt werden soll, ein SAW-Temperatursensorelement aufweisen und kann in der Bohrung in einem, insbesondere pastenförmigen, Material eingebettet sein, welches eine hohe thermische Leitfähigkeit aufweist und welches eine Verankerung der Sensoreinheit in der Bohrung bewirkt. Auf diese Weise wird ein fester Halt der Sensoreinheit an dem Rotor auch bei hohen Drehzahlen und gegen die dabei auftretenden Kräfte bewirkt und zugleich eine Erhöhung der Messgenauigkeit der Temperatur erzielt, da die am Rotor anliegende Temperatur sehr gut an das in dem die hohe thermisehe Leitfähigkeit aufweisenden Material eingebetteten SAW-Temperatursensorelement weitergeleitet wird. Verwendbar sind hier insbesondere solche pastösen Füllstoffe oder Klebstoffe, die einerseits die Sensoreinheit in der Bohrung so festzuhalten vermögen, dass diese auch bei hohen Drehzahlen des Rotors und den dabei auftretenden Zentrifugalkräften fest in der Bohrung sitzt, die andererseits aber auch eine ausreichend hohe Flexibilität aufweist und thermische Spannungen, die bei einer Erwärmung aufgrund der unterschiedlichen thermischen Ausdehnungskoeffizienten des Rotormaterials und des Materials der Sensoreinheit, insbesondere des Kristallmaterials des SAW-Sensorelement auszugleichen und so zu vermeiden, dass insbesondere das SAW-Sensorelement etwas Schaden nimmt.

Der Begriff "hohe thermische Leitfähigkeit" besagt dabei, dass das Material den Wärmeübertrag von dem Rotormaterial auf das SAW-Temperatursensorelement deutlich verbessert, verglichen mit einem Zustand ohne ein solches Material. Dazu hat das hier bevorzugt verwendete Material eine deutlich höhere Wärmeleitfähigkeit als Luft (deren Leitfähigkeit bei ca. 0,024 W/mK beträgt), weist bevorzugt in dem relevanten Temperaturbereich der Einsatztemperaturen eine Wärmeleitfähigkeit von 1 W/mK oder mehr auf.

Da auch die Kopplerstruktur der Abfrageeinheit in kleiner Baugröße realisiert werden kann, kann diese in einem vergleichsweise engen Raum und Bereich eines eng bemessenen Luftspaltes, der z.B. ein Maß von 20 mm oder weniger, insbesondere von 15 mm oder weniger, ggf. sogar noch weniger, wie z.B. 7 mm oder weniger, oder sogar bis hin zu nur 2 mm, aufweisen kann, in einer Position angeordnet werden, die einem von dem Kopplerelement bei rotierendem Rotor überstrichenen Bereich gegenüberliegt und kann dabei eine Kommunikation zwischen der Abfrageeinheit und der Sensoreinheit über eine drahtlose Signalübermittlung zwischen Kopplerstruktur und Kopplerelement ausbilden, ohne hier den Aufbau und die Funktion des Elektromotors etwa zu beeinträchtigen.

Mit der wie vorstehend beschriebenen Technologie und dem besonderen Aufbau des Elektromotors mit der beschriebenen Sensorik kann also ein Zustandswert eines Zustandsparameters, wie z.B. die Temperatur, des Rotors direkt gemessen werden, sodass nicht auf eine näherungsweise Bestimmung anhand von Berechnungen und Simulationen zurückgegriffen werden muss. Entsprechend ist z.B. bei einer Temperaturmessung das Fehlerfenster der ermittelten Temperatur deutlich geringer, sodass der Elektromotor im Grenzbereich mit höherer Leistung betrieben werden kann, ein Zurückfahren der Leistung, wenn eine kritische Temperatur erreicht wird, erst dann erfolgen muss, wenn diese Temperatur tatsächlich gemessen wird, und nicht bereits zuvor unter Einbeziehung eines Sicherheitspuffers aufgrund der Ungenauigkeiten einer indirekten Temperaturabschätzung durch Simulation und rechnerische Ableitung aus anderen ermittelten Parametern. Die Erfinder gehen hier davon aus, dass ein Betreiben eines erfindungsgemäß aufgebauten Elektromotors in einem Bereich von bis zu 10 % oberhalb der Leistungsobergrenze von solchen Modellen möglich ist, die für die Temperaturbestimmung auf die indirekten Methoden einer Simulation, bzw. rechnerischen, mittelbaren Bestimmung zurückgreifen.

Das SAW-Sensorelement der Sensoreinheit kann grundsätzlich nach einem beliebigen der beiden bekannten Prinzipien des Resonators bzw. des nach dem Laufzeitverzögerungsprinzip arbeitenden SAW-Sensorelements (sogenannte Delayline-SAW) sein. Die Erfinder haben allerdings herausgefunden, dass sich SAW-Sensorelemente der zweitgenannten Bauform und Funktionsweise besonders gut für die Umsetzung der Erfindung eignen.

Auch wenn grundsätzlich die Bestimmung gerade der Rotortemperatur in verschiedenen möglichen Formen von Elektromotoren, sowohl bei Asynchronmotoren als auch bei Synchronmotoren, von Bedeutung sein kann, ist dies insbesondere bei Synchronmotoren mit an dem Rotor angeordneten Permanentmagneten von besonderer Bedeutung. Denn hier kann eine zu hohe Rotortemperatur, wie eingangs bereits ausgeführt, zu einer teilweisen oder vollständigen Entmagnetisierung der Permanentmagnete am Rotor führen und damit zu einem irreversiblen Schaden und Funktionsausfall des Motors. Gerade bei solchen Synchronmotoren, die aktuell im Bereich von Elektroautomobilen Einsatz finden, ist eine erfindungsgemäße Ausgestaltung von besonderem Vorteil, erlaubt sie doch eine genauere Leistungssteuerung der Elektromotoren und dabei ein Betreiben dieser Synchronmotoren weiter in den Grenzbereich einer Maximalleistung herein, sodass aus Synchronmotoren gleicher Bauart eine höhere Leistung erhalten werden kann, bzw. zum Erreichen einer vorgegebenen Leistung auch anders und einfacher aufgebaute Synchronmotoren, die typischerweise kostengünstiger sind, verwendet werden können. Damit die Entmagnetisierung der Permanentmagnete bei möglichst hohen Temperaturen einsetzt, werden bei den in Elektromotoren verbauten Permanentmagneten Legierungen mit extrem raren und sehr teuren seltenen Erden eingesetzt. Durch eine genauere Kenntnis der tatsächlichen Rotortemperatur, wie sie die Erfindung ermöglicht, kann nun für den Elektromotor entweder bei gleichen Permanentmagneten die Leistung erhöht werden, oder es kann die gleiche Leistung mit aus anderen Legierungen gebildeten und damit kostengünstigeren Permanentmagneten erreicht werden.

Neben einer Überwachung der Temperatur kann auch die Überwachung von anderen Zustandsparametern gerade auch bei einem Synchronmotor von großem Vorteil sein.

Für die Anordnung der Sensoreinheit ist besonders vorteilhaft, wenn diese in einer solchen Weise gelagert ist, dass das Kopplerelement an einer an einem axialen Ende des Rotors liegenden Oberfläche angeordnet ist. Die Kopplerstruktur der Abfrageeinheit ist dann üblicherweise an einem stirnseitigen Gehäuseelement, zum Beispiel einem Gehäusedeckel, des Elektromotors angeordnet. Eine solche Anordnung, dies haben die Erfinder erkannt, ermöglicht eine drahtlose Kommunikationsverbindung zwischen der Kopplerstruktur der Abfrageeinheit und dem Kopplerelement der Sensoreinheit über einen weiten Drehbereich des Rotors, vielfach in einem Bereich von 270° oder sogar darüber. Dies ist von Vorteil, da die Übermittlung des Abfragesignals bis hin zum Erhalt des Antwortsignals in einem Zeitfenster erfolgen sollte, idealerweise muss, in dem eine Drahtlosverbindung zwischen der Kopplerstruktur und dem Kopplerelement durchgehend Bestand hat. Gerade bei hohen Drehzahlen ist ein solches Zeitfenster nur dann ausreichend groß, wenn über einen weiten Drehwinkel des Rotors die Verbindung zwischen Kopplerstruktur und Kopplerelement gewährleistet ist. Bei der wie vorstehend erläuterten Anordnung von Kopplerelement und Kopplerstruktur ist von Vorteil, wenn diese in einer im Wesentlichen gleichen radialen Entfernung zur Rotationsachse des Rotors positioniert angeordnet sind. So wird eine optimale Kopplung zwischen der Kopplerstruktur und dem Kopplerelement noch weiter unterstützt.

Insbesondere da bei dem erfindungsgemäßen Elektromotor der Luftspalt eine geringe Höhenerstreckung aufweisen kann, wie vorstehend bereits erwähnt ein Maß von 20 mm oder weniger, insbesondere von 15 mm oder weniger, ja bis hinab zu sehr geringen Abständen von 1 bis 2 mm, aufzeigen kann, können die Abfrageeinheit, insbesondere deren Kopplerstruktur, und das Kopplerelement der Sensoreinheit so eingerichtet und abgestimmt sein, dass eine vorrangig durch das zeitlich sich verändernde Magnetfeld bestimmte Nahbereichskommunikation zwischen der Abfrageeinheit und der Sensoreinheit stattfindet. Der durch den Luftspalt gebildete Abstand zwischen Kopplerstruktur und Kopplerelement ist hier nämlich typischerweise nicht so groß, dass sich vollständige elektromagnetische Wellen einer typischen Funkkommunikation ausbilden können, sondern dass vielmehr eine Nahfeldkopplung zu beobachten ist und genutzt werden muss, die vorteilhafterweise durch das Magnetfeld (B-Feld) bestimmt wird. Insoweit sind hier Kopplungselement und Kopplungsstruktur vorzugsweise auch nicht als Antennen im herkömmlichen Sinne ausgebildet, sondern optimiert für eine wie vorstehend beschriebene Nahfeldübertragung. Dies erlaubt insbesondere auch eine Ausbildung der Bauteile Kopplungselement und Kopplungsstruktur in geringer Baugröße und kompakter Bauweise, was deren Anordnung in dem eng bemessenen Luftspalt überhaupt erst ermöglicht.

Gerade dann, wenn hohe Drehzahlen erreicht werden sollen, kann es sich anbieten, dass bei dem erfindungsgemäßen Elektromotor eine Synchronisation der Abfrageeinheit mit der Rotation des Rotors in einer solchen Weise vorgenommen wird, dass die Abfrageeinheit einer Abfrage der Sensoreinheit durchführt, während das Kopplerelement in einem Bereich befindlich ist, in dem es mit der Kopplerstruktur koppeln kann. Eine solche Synchronisation kann dabei in einer an sich bekannten Weise vorgenommen werden, zumal bei den typischerweise bekannten Elektromotoren, wie insbesondere Synchronmotoren, die Winkelposition des Rotors ohnedies überwacht ist bzw. aus Signalen und Informationen, die schon jetzt abgerufen werden, ermittelt werden kann. So kann eine Abfrage der Sensoreinheit zum Beispiel eingeleitet werden, sobald das Kopplerelement in den Kopplungsbereich der Kopplerstruktur einläuft, sodass während des Signallaufs die weitergeführte Rotation des Rotors nicht so weit voranschreitet, dass es zu einem Abriss der Kopplungsverbindung zwischen der Kopplerstruktur und dem Kopplerelement kommt.

Grundsätzlich ist es möglich, dass mit einer Abfrageeinheit mehrere Sensoreinheiten adressiert und abgefragt werden können. Insoweit kann mit Vorteil vorgesehen sein, dass der erfindungsgemäße Elektromotor wenigstens zwei, gegebenenfalls mehr als zwei Sensoreinheiten aufweist, die nach dem vorstehend beschriebenen Prinzip aufgebaut sind und arbeiten und deren Kopplerelemente jeweils angeordnet sind, mit der Kopplerstruktur der Abfrageeinheit zu koppeln. Die Abfrage der mehreren Sensoreinheiten kann dann über verschiedene Kommunikationskanäle erfolgen. So ist es zum Beispiel möglich, an verschiedenen Stellen des Rotors SAW-Sensorelemente zu platzieren und diese über entsprechende Leiterstrukturen mit zugehörigen Kopplerelementen zu verbinden und zu Sensoreinheiten auszubilden. Zum Beispiel können auf demselben Radius des Rotors an unterschiedlichen Winkelpositionen Kopplerelemente verschiedener Sensoreinheit in positioniert sein, welche Sensoreinheiten in über unterschiedliche axiale Längen erstreckt sind und in die Tiefe des Rotor ragen, sodass an unterschiedlichen axialen Positionen die SAW-Sensorelemente der verschiedenen Sensoreinheiten positioniert sind. Auf diese Weise können beispielsweise Temperaturgradienten oder Zustandswertverteilung anderer Zustandsparameter in dem Rotor bestimmt werden, es können z.B. Temperaturen oder andere Zustandsparameter an verschiedenen neuralgischen Punkten bestimmt werden oder dergleichen. Auch ist es möglich, Sensoreinheiten mit SAW-Sensorelementen im Bereich des Stators oder Gehäuses anzuordnen, deren Kopplerelement wiederum so zu positionieren, dass sie mit der Kopplerstruktur der Abfrageeinheit koppeln können. Auf diese Weise können mit ein und derselben Abfrageeinheit z.B. auch eine ein oder mehrere Zustandsparameter des Stators, wie z.B. eine Statortemperatur, oder Zustandsparameter, wie Temperaturen, von weiteren Elementen des Elektromotors erfasst und überwacht werden, um eine noch bessere Analyse des Elektromotors im Betrieb zu erhalten und gegebenenfalls eine noch auf weiteren Parametern basierte Steuerungsoption zu schaffen.

Die Abfrageeinheit kann dabei insbesondere wie in der EP 3171291 A1 beschrieben ausgebildet sein und nach dem dort offenbarten Prinzip arbeiten.

In einem weiteren Aspekt gibt die Erfindung, wie bereits erwähnt, eine Überwachungseinrichtung zum Überwachen eines Zustandsparameters, wie einer Temperatur eines rotierenden Elements, insbesondere des Rotors eines Elektromotors, insbesondere eines Synchronmotors, an. Diese Überwachungseinrichtung enthält einerseits eine Sensoreinheit und andererseits eine Abfrageeinheit. Die Sensoreinheit ist eine wie vorstehend beschriebene Einheit, nämlich eine solche, die ein auf dem Prinzip der Oberflächenwellen basierendes SAW-Sensorelement zum Erfassen eines Zustandswertes eines Zustandsparameters, ein Kopplerelement und eine das SAW-Sensorelement und das Kopplerelement zum Übertragen von analogen elektromagnetischen Signalen verbindende Leiterstruktur aufweist. Dieses Sensorelement ist als gesondertes miniaturisiertes Bauteil gebildet und kann entsprechend eingesetzt werden, kann an rotierenden Elementen, wie insbesondere einem Rotor eines Elektromotors, angeordnet werden, insbesondere in einer dort angebrachten Bohrung versenkt werden. Hierfür ist die Sensoreinheit in einer axialen Richtung lang gestreckt ausgebildet und weist an einem ersten Längsende das Kopplerelement und an einem gegenüberliegenden zweiten Längsende das SAW-Sensorelement auf und dazwischen die das Kopplerelement und das SAW-Sensorelement in Längsrichtung verbindende Leiterstruktur. Die erfindungsgemäße Überwachungseinrichtung enthält des Weiteren die Abfrageeinheit, die einen Signalgenerator zum Erzeugen von Abfragesignalen, eine mit dem Signalgenerator verbindbare Kopplerstruktur sowie einen Auswerteschaltkreis zum Auswerten von von der Sensoreinheit empfangenen Antwortsignalen aufweist. Eine solche Überwachungseinrichtung ist, wie schon erwähnt, besonders gut geeignet, um eine Überwachung eines Zustandsparameters, z.B. eine Temperaturüberwachung, eines rotierenden Elementes, insbesondere in einem Elektromotor, vorzunehmen und dafür in einer wie vorstehend beschriebenen Weise in dem Elektromotor verbaut bzw. dort angebracht oder angeordnet zu werden.

Bei der Sensoreinheit der erfindungsgemäßen Überwachungseinrichtung können das Kopplerelement, die Leiterstruktur und das SAW-Sensorelement insbesondere auf einem gemeinsamen Substrat angeordnet sein, bzw. können diese Elemente auf einem gemeinsamen Substrat ausgebildet sein. Ein solches Substrat kann insbesondere ein nicht ferromagnetisches Material sein, zum Beispiel eine Keramik, ein Kunststoff oder dergleichen. Ein solches gemeinsames Substrat gibt der Sensoreinheit eine Eigenfestigkeit und lässt diese vergleichsweise einfach zum Beispiel in einer in einem rotierenden Element, insbesondere einem Rotor eines Elektromotors, eingebrachten Bohrung versenken und dort einbauen und festlegen.

Auch wenn grundsätzlich ebenfalls nach dem Resonatorprinzip arbeitende SAW-Sensorelemente möglich sind, wird, wie vorstehend bereits erwähnt, ein SAW-Sensorelement bevorzugt, welches eine nach dem Laufzeitverzögerungsprinzip arbeitendes SAW-Sensorelement (Delayline) ist.

Die Überwachungseinrichtung kann mit Vorteil genau eine Abfrageeinheit sowie wenigstens zwei, insbesondere mehr als zwei, mit von der Abfrageeinheit adressierbare Sensoreinheiten enthalten. Diese Sensoreinheiten verfügen dann alle über ein SAW-Sensorelement, ein Kopplungselement und eine diese beiden Elemente verbindende Leiterstruktur. Sie können alle zum Messen von Zustandswerten desselben Zustandsparameters, wie einer Temperatur, ausgebildet sein. Sie können aber auch für die Messung von Zustandswerten unterschiedlicher Zustandsparameter, wie Temperatur und Drehmoment) ausgerichtet sein, so dass eine Auswerteeinheit eben unterschiedliche Zustandsparameter mit der Überwachungseinrichtung überwachen kann.

Weitere Vorteile und Merkmale der Erfindung ergeben sich aus der nachfolgenden Beschreibung möglicher Ausführungsformen anhand der beigefügten Figuren. Dabei zeigen:
- Figur 1: eine schematische Ansicht wesentlicher Komponenten eines Elektromotors in einer Explosionsdarstellung mit Teilen der erfindungsgemäßen Überwachungseinrichtung;
- Figur 2: eine der Figur 1 vergleichbare Explosionsdarstellung aus einer anderen Perspektive;
- Figur 3: in einer vergrößerten Ausschnittdarstellung und explodiert die Anordnung einer Sensoreinheit in einer Bohrung auf einer Stirnseite des Rotors des Elektromotors aus Figur 1;
- Figur 4: eine vergleichbare Ansicht wie Figur 3, jedoch mit versenkt angeordneter Sensoreinheit;
- Figur 5: eine geschnittene Ausschnittdarstellung zur Veranschaulichung der Anordnung der Sensoreinheit in der Bohrung;
- Figur 6: eine Explosionsdarstellung einer möglichen ersten Ausgestaltungsvariante der Sensoreinheit; und
- Figur 7: eine Explosionsdarstellung einer möglichen zweiten Ausgestaltungsvariante der Sensoreinheit.

In den Figuren sind mögliche Ausgestaltungsvarianten der Erfindung dargestellt und werden nachstehend näher erläutert.

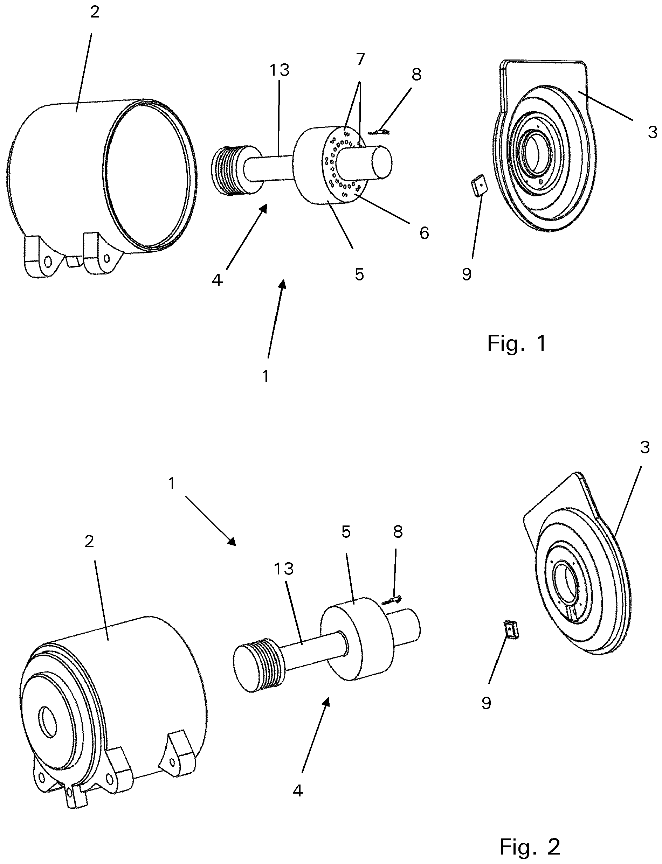

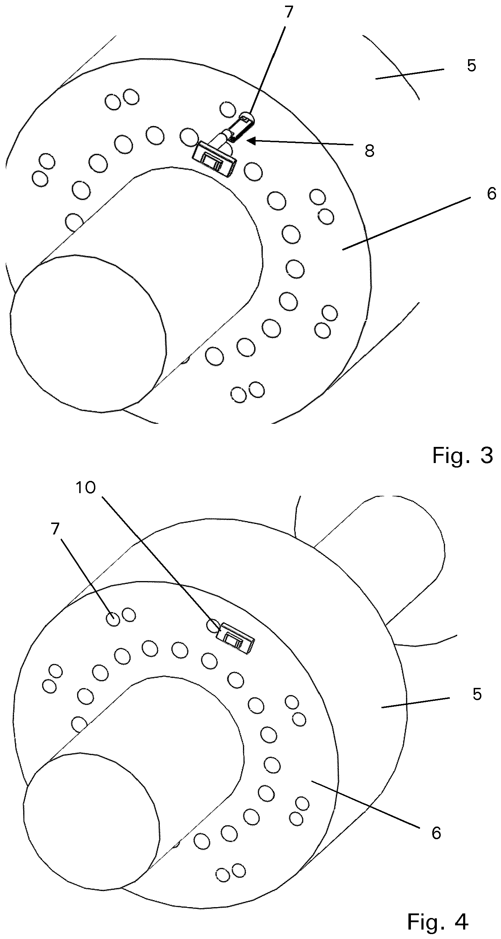

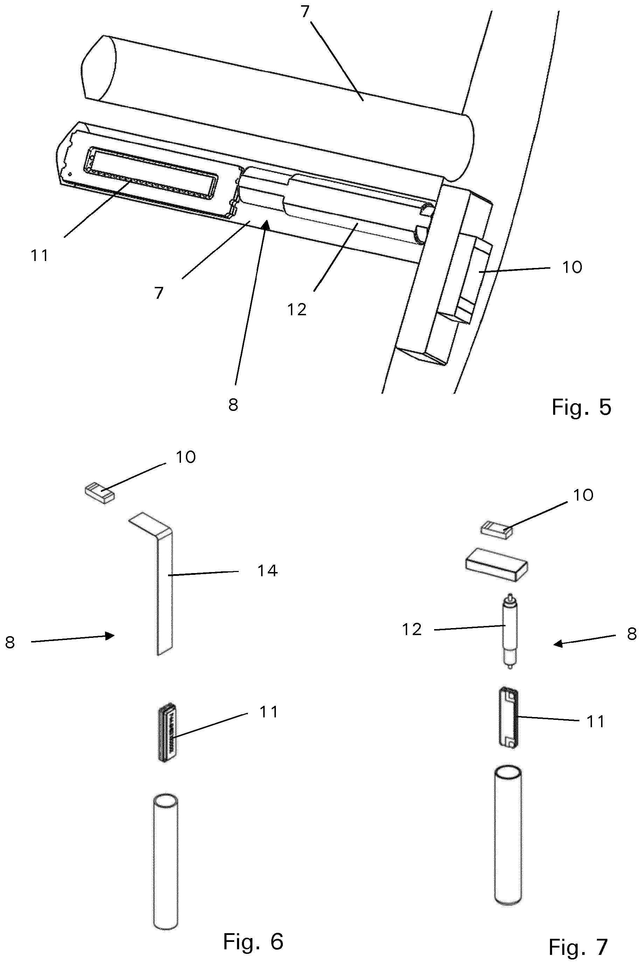

Zunächst zeigen die Figuren 1 und 2 jeweils in einer Explosionsdarstellung wesentliche Komponenten eines Elektromotors 1. Gezeigt sind ein Gehäusetopf 2, welcher einen nicht näher gezeigten Stator aufnimmt, ein den Gehäusetopf 2 verschließender und zusammen mit diesem ein Motorgehäuse bildender Gehäusedeckel 3 und ein in dem Motorgehäuse aufgenommener Rotor 4. Der hier gezeigte Elektromotor 1 ist insbesondere ein Synchronmotor, dessen Rotor 4 hier nicht näher dargestellte Permanentmagnete enthält. Diese sind in einem Rotorkörper 5 angeordnet bzw. eingelassen. Der Rotorkörper 5 weist von einer Stirnseite 6 her in den Rotorkörper axial geführte Bohrungen 7 auf, deren Öffnungen im zusammengefügten Zustand des Elektromotors 1 in Richtung des Gehäusedeckels 3 weisen. Eine Sensoreinheit 8 ist in einer der Bohrungen 7 (teil-)versenkt angeordnet. An dem Gehäusedeckel 3 ist eine Kopplerstruktur 9 einer mit ihren weiteren Komponenten nicht näher dargestellten Abfrageeinheit angeordnet und festgelegt. Die Anordnung der Sensoreinheit 8 in einer der Bohrungen 7 an dem Rotorkörper 5 ist in den Figuren 3 bis 5 noch einmal näher dargestellt. Zu erkennen ist zunächst in der Figur 5 der weitere Aufbau der Sensoreinheit 8, die in der Bohrung 7 mit einem wesentlichen Teil ihrer Erstreckung versenkt angeordnet ist. Die Sensoranordnung 8 ist im Wesentlichen längserstreckt gebildet mit einem an einem ersten Längsende angeordneten Kopplerelement 10, einem an einem zweiten Längsende angeordneten SAW-Sensorelement 11, das z.B. ein für eine Temperaturüberwachung des Rotors genutztes SAW-Temperatursensorelement sein kann, und einer diese beiden Elemente, Kopplerelement 9 und SAW-Sensorelement 11 verbindenden Leiterstruktur 12. Leiterstruktur 12 und SAW-Sensorelement 11 sind in der Bohrung 7 versenkt angeordnet; das Kopplerelement 10 liegt außerhalb der Bohrung 7 und dabei auf der Oberfläche der Stirnseite 6 auf. Die radiale Position des Kopplerelements 10 bezogen auf eine Rotationsachse 13 des Rotors 4 entspricht dabei der bezogen auf dieselbe Achse 13 gesehenen radialen Position der Kopplerstruktur 9 der Abfrageeinheit. Im zusammengesetzten Zustand ist zwischen dem Gehäusedeckel 3 des Elektromotors 1 und der dort angeordneten Kopplerstruktur 9 und der Stirnseite 6 des Rotorkörpers 5 und dem dort angeordneten Kopplerelement 10 der Sensoreinheit 8 ein enger Luftspalt gebildet, der zum Beispiel 10 mm betragen kann. Über diesen Luftspalt hinweg kann zwischen der Kopplerstruktur 9 und dem Kopplerelement 10 eine drahtlose Kommunikationsverbindung zum Übertragen analoger Signale, insbesondere Hochfrequenzsignale, ausgebildet werden, insbesondere eine Nahfeldkopplung, sodass ausgehend von einer Abfrage Elektronik mit einem Signalgenerator, der mit der Kopplerstruktur 9 verbunden ist, ein Abfragesignal, zum Beispiel ein solches der Frequenz 2,4 GHz, an das Kopplerelement 10 übermittelt und von dort über die Leiterstruktur 12 bis zu dem SAW-Sensorelement 11 geleitet werden kann. Das SAW-Sensorelement 11 kann insbesondere ein solches sein, dass nach dem sogenannten Delayline-Prinzip arbeitet und das mit einer durch den Zustandswert des Zustandsparameters, z.B. durch eine Rotortemperatur, der das SAW-Sensorelement ausgesetzt ist, bestimmten Verzögerung das Signal entlang der Leiterstruktur 12 wieder zurück übermittelt an das Kopplerelement 10, von wo aus es über die Kopplung zur Kopplerstruktur 9 zurückgegeben wird an die Abfrageeinheit. Von der Kopplerstruktur 9 gelangt das Signal dann zu einem Auswerteschaltkreis der Abfrageeinheit, der aus der festgestellten Laufzeitverzögerung einen am Ort des SAW-Sensorelement 11 anliegenden Zustandswert des Zustandsparameters, z.B. die dort anliegende Temperatur, ermittelt. Durch die gezeigte Positionierung von Sensoreinheit 8, insbesondere deren Kopplerelement 10, und Kopplerstruktur 9 wird erreicht, dass eine Kupplung zwischen Kopplerstruktur 9 und Kopplerelement 10 über einen weiten Rotationsbereich des Rotors 4 erhalten ist. Dies können insbesondere 270° oder mehr sein, sodass eine Signalabfrage von der Abfrageeinheit, insbesondere über deren Kopplerstruktur 9 zu der Sensoreinheit 8 gestartet und das Antwortsignal empfangen werden kann, während das Kopplerelement 10 sich im Kopplungsbereich mit der Kopplerstruktur 9 befindet.

Mit dieser Anordnung kann also ein Zustandswert eines Zustandsparameters, kann bspw. die Temperatur, des Rotors 4 mit einer tatsächlichen Messung bestimmt werden und kann dieser Wert im Folgenden für die Steuerung des Betriebs des Elektromotors 1 verwendet werden, insbesondere für eine Leistungssteuerung bzw. Leistungsbegrenzung. Im Falle der so exakter möglichen Bestimmung der Temperatur kann der Elektromotor 1 dann weiter in den Grenzbereich hinein betrieben werden kann bis zu einer maximal zulässigen Temperatur, ohne dass hier ein solchermaßen weit bemessener Puffer eingerechnet werden muss für Ungenauigkeiten, die aus der bisher üblichen Abschätzung bzw. Simulation der Rotortemperatur entstehen.

In den Figuren 6 und 7 sind zwei mögliche Varianten gezeigt, wie die Sensoreinheit 8 gebildet sein kann. In der Variante gemäß Figur 6 ist ein Substratelement 14 gezeigt, an dem das SAW-Sensorelement 11 einerseits und das Kopplerelement 10 andererseits festgelegt sind und über welches die hier nicht näher gezeigten Leiterstrukturen geführt sind. Das Substratelement 14 trägt insoweit die elektromagnetische Signalverbindung, bildet aber auch eine mechanisch stabile Brücke und einen Halter für die einzelnen Elemente aus. Das Substratelement 14 ist dabei insbesondere aus einem nicht ferromagnetischen Material, um nicht etwa einen Effekt auf den Rotor auszuüben und die Ausbildung der Magnetfelder zu beeinflussen.

In Figur 7 ist ein alternativer Aufbau gezeigt, in dem die Leiterstruktur 12 als Koaxial- bzw. Hohlleiter ausgebildet ist und neben der Leitungsfunktion auch eine mechanische Stabilisierungs- und Verbindungsfunktion übernimmt. SAW-Sensorelement 11 und Kopplerelement 10 sind jeweils mit den Längsenden der Leiterstruktur 12 verbunden.

Es soll hier erwähnt sein, dass abweichend von den in den Figuren gezeigten Beispielen nicht nur eine Sensoreinheit 8 in dem Rotor 4 angeordnet werden kann, sondern dass derer Sensoreinheiten 8 mit analogem Aufbau auch zwei oder mehr in dem Rotor 4 angeordnet werden können, insbesondere auch mit einer Positionierung der SAW-Sensorelemente 11 in unterschiedlichen axialen Tiefen des Rotors 4, genauer des Rotorkörpers 5, um auf diese Weise an unterschiedlichen Positionen Messungen der Zustandswerte von Zustandsparametern, wie z.B. Temperaturmessungen, vorzunehmen. Diese mehreren Sensoreinheiten können insgesamt mit ein und derselben Abfrageeinheit, insbesondere über ein und dieselbe Kopplerstruktur 9, abgefragt werden, insbesondere auf unterschiedlichen Kommunikationskanälen. Auch ist es möglich, an einem der stationären Elemente, Stator und/oder Gehäuse oder auch an einer Starterwicklung entsprechende SAW-Sensorelement 11 zu positionieren und die Kopplerelemente 10 der zugehörigen Sensoreinheiten 8 so anzuordnen, dass sie mit der Kopplerstruktur 9 der Abfrageeinheit koppeln und entsprechend von der Abfrageeinheit mit abgefragt und ausgelesen werden können.

### Bezugszeichenliste

- 1: Elektromotor
- 2: Gehäusetopf
- 3: Gehäusedeckel
- 4: Rotor
- 5: Rotorkörper
- 6: Stirnseite
- 7: Bohrung
- 8: Sensoreinheit
- 9: Kopplerstruktur
- 10: Kopplerelement
- 11: SAW-Sensorelement
- 12: Leiterstruktur
- 13: Rotationsachse
- 14: Substratelement

## Patentansprüche

1. Elektromotor (1) mit einem Motorgehäuse (2, 3), mit in dem Motorgehäuse (2, 3) angeordnet je einem Stator und einem Rotor (4) sowie mit einer Überwachungseinrichtung zum Überwachen eines Zustandsparameters, insbesondere der Temperatur, des Rotors (4), wobei die Überwachungseinrichtung eine Sensoreinheit (8) und eine Abfrageeinheit umfasst, wobei die Sensoreinheit (8) an dem Rotor (4) angeordnet ist und ein auf dem Prinzip der Oberflächenwellen basierendes SAW-Sensorelement (11) zum Erfassen eines Zustandswerts des Zustandsparameters, ein Kopplerelement (10) und eine das SAW-Sensorelement (11) und das Kopplerelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbundene, an dem Stator oder an einem Abschnitt des Motorgehäuses (2, 3) in einem Bereich, der entlang eines zwischen dem Rotor (4) und dem Stator oder dem Abschnitt des Motorgehäuses (2, 3) ausgebildeten Luftspaltes einem von dem Kopplerelement (10) bei rotierendem Rotor (4) überstrichenen Bereich gegenüberliegt, und dem Rotor (4) zugewandt angeordnete Kopplerstruktur (9) sowie einen Auswerteschaltkreis zum Auswerten von von der Sensoreinheit (8) empfangenen Antwortsignalen aufweist.

2. Elektromotor (1) nach Anspruch 1, **dadurch gekennzeichnet, dass** das SAW-Sensorelement (11) ein nach dem Laufzeitverzögerungsprinzip arbeitendes SAW-Sensorelement (11) ist.

3. Elektromotor (1) nach einem der vorhergehenden Ansprüche, **dadurch gekennzeichnet, dass** er ein Synchronmotor ist mit an dem Rotor (4) angeordneten Permanentmagneten.

4. Elektromotor (1) nach einem der vorhergehenden Ansprüche, **dadurch gekennzeichnet, dass** das Kopplerelement (10) an einer an einem axialen Ende des Rotors (4) liegenden Oberfläche des Rotors (4) angeordnet ist.

5. Elektromotor (1) nach Anspruch 4, **dadurch gekennzeichnet, dass** das Kopplerelement (10) und die Kopplerstruktur (9) in einer im Wesentlichen gleichen radialen Entfernung zur Rotationsachse (13) des Rotors (4) positioniert angeordnet sind.

6. Elektromotor (1) nach einem der vorhergehenden Ansprüche, **dadurch gekennzeichnet, dass** die Sensoreinheit (9) eine axial langgestreckte Form aufweist und in einer Bohrung (7) in dem Rotor (4) jedenfalls teilversenkt derart angeordnet ist, dass das SAW-Sensorelement (11) im Innern der Bohrung (7) angeordnet ist, das Kopplerelement (10) an der Oberfläche des Rotors (10) freiliegt.

7. Elektromotor (1) nach Anspruch 6, **dadurch gekennzeichnet, dass** die Sensoreinheit (8) ein SAW-Temperatursensorelement (11) aufweist und in der Bohrung (7) in einem, insbesondere pastenförmigen, Material eingebettet ist, welches eine hohe thermische Leitfähigkeit aufweist und welches eine Verankerung der Sensoreinheit in der Bohrung (7) bewirkt.

8. Elektromotor (1) nach einem der vorhergehenden Ansprüche, **dadurch gekennzeichnet, dass** der Luftspalt ein Maß von 20 mm oder weniger aufweist, insbesondere von 15 mm oder weniger.

9. Elektromotor (1) nach Anspruch 8, **dadurch gekennzeichnet, dass** die Abfrageeinheit, insbesondere deren Kopplerstruktur (9), und das Kopplerelement (10) der Sensoreinheit (8) so eingerichtet und abgestimmt sind, dass eine vorrangig durch das zeitlich sich verändernde Magnetfeld bestimmte Nahbereichskommunikation zwischen der Abfrageeinheit und der Sensoreinheit (8) stattfindet.

10. Elektromotor (1) nach einem der vorhergehenden Ansprüche, **gekennzeichnet durch** eine Synchronisation der Abfrageeinheit mit der Rotation des Rotors (4) in einer solchen Weise, dass die Abfrageeinheit eine Abfrage der Sensoreinheit (8) durchführt, während das Kopplerelement (10) in einem Bereich befindlich ist, in dem es mit der Kopplerstruktur (9) koppeln kann.

11. Elektromotor (1) nach einem der vorhergehenden Ansprüche, **dadurch gekennzeichnet, dass** er wenigstens zwei jeweils ein auf dem Prinzip der Oberflächenwellen basierendes SAW-Sensorelement (11), ein Kopplerelement (10) und eine das SAW-Sensorelement (11) und das Kopplerelement (10) zum Übertragen von analogen elektromagnetischen Signalen verbindende Leiterstruktur (12) aufweisende Sensoreinheiten (8) aufweist, deren Kopplerelemente (10) angeordnet sind, mit der Kopplerstruktur (9) der einen Abfrageeinheit für eine Signalübertragung zu koppeln, und dass die Abfrageeinheit eingerichtet ist, die wenigstens zwei Sensoreinheiten (8) auf unterschiedlichen Kommunikationskanälen abzufragen.

12. Überwachungseinrichtung zum Überwachen eines Zustandsparameters, wie einer Temperatur, eines rotierenden Elements, insbesondere des Rotors (4) eines Elektromotors (1), insbesondere eines Synchronmotors, mit einer Sensoreinheit (8) und einer Abfrageeinheit, wobei die Sensoreinheit (8) ein auf dem Prinzip der Oberflächenwellen basierendes SAW-Sensorelement (11) zum Erfassen eines Zustandswertes des Zustandsparameters, ein Kopplerelement (10) und eine das SAW-Sensorelement (11) und das Kopplerelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbindbare Kopplerstruktur (9) sowie einen Auswerteschaltkreis zum Auswerten von von der Sensoreinheit (8) empfangenen Antwortsignalen aufweist, wobei die Sensoreinheit (8) in einer axialen Richtung langgestreckt gebildet ist mit dem Kopplerelement (10) an einem ersten Längsende der Sensoreinheit (8) und dem SAW-Sensorelement (11) an einem dem ersten Längsende gegenüberliegenden zweiten Längsende der der Sensoreinheit (8) und dazwischen der das Kopplerelement (10) und das SAW-Sensorelement (11) in Längsrichtung verbindenden Leiterstruktur (12).

13. Überwachungseinrichtung nach Anspruch 11, **dadurch gekennzeichnet, dass** das Kopplerelement (10), die Leiterstruktur (12) und das SAW-Sensorelement (11) auf einem gemeinsamen Substrat (14) angeordnet und/oder ausgebildet sind.

14. Überwachungseinrichtung nach einem der Ansprüche 12 oder 13, **dadurch gekennzeichnet, dass** das SAW-Sensorelement (11) ein nach dem Laufzeitverzögerungsprinzip arbeitendes SAW-Sensorelement (11) ist.

15. Überwachungseinrichtung nach einem der Ansprüche 12 bis 14, **dadurch gekennzeichnet, dass** sie genau eine Abfrageeinheit sowie wenigstens zwei, insbesondere mehr als zwei, mit von der Abfrageeinheit adressierbare Sensoreinheiten (8) enthält.

## Geänderte Patentansprüche

### Geänderte Patentansprüche gemäss Regel 137(2) EPÜ.

1. Elektromotor (1) mit einem Motorgehäuse (2, 3), mit in dem Motorgehäuse (2, 3) angeordnet je einem Stator und einem Rotor (4) sowie mit einer Überwachungseinrichtung zum Überwachen eines Zustandsparameters, insbesondere der Temperatur, des Rotors (4), wobei die Überwachungseinrichtung eine Sensoreinheit (8) und eine Abfrageeinheit umfasst, wobei die Sensoreinheit (8) an dem Rotor (4) angeordnet ist und ein auf dem Prinzip der Oberflächenwellen basierendes SAW-Sensorelement (11) zum Erfassen eines Zustandswerts des Zustandsparameters, ein Kopplerelement (10) und eine das SAW-Sensorelement (11) und das Kopplerelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbundene, an dem Stator oder an einem Abschnitt des Motorgehäuses (2, 3) in einem Bereich, der entlang eines zwischen dem Rotor (4) und dem Stator oder dem Abschnitt des Motorgehäuses (2, 3) ausgebildeten Luftspaltes einem von dem Kopplerelement (10) bei rotierendem Rotor (4) überstrichenen Bereich gegenüberliegt, und dem Rotor (4) zugewandt angeordnete Kopplerstruktur (9) sowie einen Auswerteschaltkreis zum Auswerten von von der Sensoreinheit (8) empfangenen Antwortsignalen aufweist, **dadurch gekennzeichnet, dass** die Abfrageeinheit, insbesondere deren Kopplerstruktur (9), und das Kopplerelement (10) der Sensoreinheit (8) so eingerichtet und abgestimmt sind, dass eine vorrangig durch das zeitlich sich verändernde Magnetfeld bestimmte Nahbereichskommunikation zwischen der Abfrageeinheit und der Sensoreinheit (8) stattfindet.

2. Elektromotor (1) nach Anspruch 1, **dadurch gekennzeichnet, dass** das SAW-Sensorelement (11) ein nach dem Laufzeitverzögerungsprinzip arbeitendes SAW-Sensorelement (11) ist.

3. Elektromotor (1) nach einem der vorhergehenden Ansprüche, **dadurch gekennzeichnet, dass** er ein Synchronmotor ist mit an dem Rotor (4) angeordneten Permanentmagneten.

4. Elektromotor (1) nach einem der vorhergehenden Ansprüche, **dadurch gekennzeichnet, dass** das Kopplerelement (10) an einer an einem axialen Ende des Rotors (4) liegenden Oberfläche des Rotors (4) angeordnet ist.

5. Elektromotor (1) nach Anspruch 4, **dadurch gekennzeichnet, dass** das Kopplerelement (10) und die Kopplerstruktur (9) in einer im Wesentlichen gleichen radialen Entfernung zur Rotationsachse (13) des Rotors (4) positioniert angeordnet sind.

6. Elektromotor (1) nach einem der vorhergehenden Ansprüche, **dadurch gekennzeichnet, dass** die Sensoreinheit (9) eine axial langgestreckte Form aufweist und in einer Bohrung (7) in dem Rotor (4) jedenfalls teilversenkt derart angeordnet ist, dass das SAW-Sensorelement (11) im Innern der Bohrung (7) angeordnet ist, das Kopplerelement (10) an der Oberfläche des Rotors (10) freiliegt.

7. Elektromotor (1) nach Anspruch 6, **dadurch gekennzeichnet, dass** die Sensoreinheit (8) ein SAW-Temperatursensorelement (11) aufweist und in der Bohrung (7) in einem, insbesondere pastenförmigen, Material eingebettet ist, welches eine hohe thermische Leitfähigkeit aufweist und welches eine Verankerung der Sensoreinheit in der Bohrung (7) bewirkt.

8. Elektromotor (1) nach einem der vorhergehenden Ansprüche, **dadurch gekennzeichnet, dass** der Luftspalt ein Maß von 20 mm oder weniger aufweist, insbesondere von 15 mm oder weniger.

9. Elektromotor (1) nach einem der vorhergehenden Ansprüche, **gekennzeichnet durch** eine Synchronisation der Abfrageeinheit mit der Rotation des Rotors (4) in einer solchen Weise, dass die Abfrageeinheit eine Abfrage der Sensoreinheit (8) durchführt, während das Kopplerelement (10) in einem Bereich befindlich ist, in dem es mit der Kopplerstruktur (9) koppeln kann.

10. Elektromotor (1) nach einem der vorhergehenden Ansprüche, **dadurch gekennzeichnet, dass** er wenigstens zwei jeweils ein auf dem Prinzip der Oberflächenwellen basierendes SAW-Sensorelement (11), ein Kopplerelement (10) und eine das SAW-Sensorelement (11) und das Kopplerelement (10) zum Übertragen von analogen elektromagnetischen Signalen verbindende Leiterstruktur (12) aufweisende Sensoreinheiten (8) aufweist, deren Kopplerelemente (10) angeordnet sind, mit der Kopplerstruktur (9) der einen Abfrageeinheit für eine Signalübertragung zu koppeln, und dass die Abfrageeinheit eingerichtet ist, die wenigstens zwei Sensoreinheiten (8) auf unterschiedlichen Kommunikationskanälen abzufragen.

11. Überwachungseinrichtung zum Überwachen eines Zustandsparameters, wie einer Temperatur, eines rotierenden Elements, insbesondere des Rotors (4) eines Elektromotors (1), insbesondere eines Synchronmotors, mit einer Sensoreinheit (8) und einer Abfrageeinheit, wobei die Sensoreinheit (8) ein auf dem Prinzip der Oberflächenwellen basierendes SAW-Sensorelement (11) zum Erfassen eines Zustandswertes des Zustandsparameters, ein Kopplerelement (10) und eine das SAW-Sensorelement (11) und das Kopplerelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbindbare Kopplerstruktur (9) sowie einen Auswerteschaltkreis zum Auswerten von von der Sensoreinheit (8) empfangenen Antwortsignalen aufweist, wobei die Sensoreinheit (8) in einer axialen Richtung langgestreckt gebildet ist mit dem Kopplerelement (10) an einem ersten Längsende der Sensoreinheit (8) und dem SAW-Sensorelement (11) an einem dem ersten Längsende gegenüberliegenden zweiten Längsende der der Sensoreinheit (8) und dazwischen der das Kopplerelement (10) und das SAW-Sensorelement (11) in Längsrichtung verbindenden Leiterstruktur (12), **dadurch gekennzeichnet, dass** die Abfrageeinheit, insbesondere deren Kopplerstruktur (9), und das Kopplerelement (10) der Sensoreinheit (8) so eingerichtet und abgestimmt sind, dass eine vorrangig durch das zeitlich sich verändernde Magnetfeld bestimmte Nahbereichskommunikation zwischen der Abfrageeinheit und der Sensoreinheit (8) stattfindet.

12. Überwachungseinrichtung nach Anspruch 11, **dadurch gekennzeichnet, dass** das Kopplerelement (10), die Leiterstruktur (12) und das SAW-Sensorelement (11) auf einem gemeinsamen Substrat (14) angeordnet und/oder ausgebildet sind.

13. Überwachungseinrichtung nach einem der Ansprüche 11 oder 12, **dadurch gekennzeichnet, dass** das SAW-Sensorelement (11) ein nach dem Laufzeitverzögerungsprinzip arbeitendes SAW-Sensorelement (11) ist.

14. Überwachungseinrichtung nach einem der Ansprüche 11 bis 13, **dadurch gekennzeichnet, dass** sie genau eine Abfrageeinheit sowie wenigstens zwei, insbesondere mehr als zwei, mit von der Abfrageeinheit adressierbare Sensoreinheiten (8) enthält.
